# FASCICULE DE BREVET EUROPEEN

(11) **EP 0 637 703 B1**
(45) Date de publication et mention de la délivrance du brevet: **05.03.1997**
(21) Numéro de dépôt: 94401698.9
(22) Date de dépôt: 22.07.1994
(51) Int. Cl.: F16F 13/00, B60K 5/12, B60G 13/00

(54) **Support hydroélastique pour la suspension d'un groupe motopropulseur dans la caisse d'un véhicule automobile et dispositif de suspension intégrant un tel support**
Hydro-elastische Stütze für ein Triebwerk im Fahrgestell eines Kraftfahrzeuges und dessen Aufnahme in einer Radaufhängungsanlage
Hydro elastic support for a drive unit in a vehicle chassis and suspension system integrating such a support

(30) Priorité: 06.08.1993 FR 9309747
(43) Date de publication de la demande: 08.02.1995
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Domloup (FR)
(74) Mandataire: Polus, Camille

(56) Documents cités:
- EP-A- 0 490 717
- EP-A- 0 490 719
- EP-A- 0 520 875
- DE-A- 2 737 985
- FR-A- 2 272 857
- FR-A- 2 281 244
- PATENT ABSTRACTS OF JAPAN vol. 11, no. 218 (M-607) (2665) 15 Juillet 1987 & JP-A-62 035 129 (BRIDGESTONE CORP.) 16 Février 1987

## Description

La présente invention concerne un support hydroélastique destiné à être interposé entre un groupe motopropulseur de véhicule automobile et la structure de la caisse du véhicule.

L'invention concerne également un dispositif de suspension de la caisse et du groupe motopropulseur dans un véhicule automobile comportant au moins un support hydroélastique selon l'invention.

On connaît une première conception de support ou cale hydroélastique, communément appelé support "anti-hachis", dont la structure et le mode de fonctionnement permet de lutter contre le mode de hachis des vibrations, c'est-à-dire contre le mode propre d'oscillations du groupe motopropulseur sur ses dispositifs de suspension, en utilisant une colonne de liquide dont on règle la résonance sur cette fréquence de hachis.

Afin d'atténuer l'effet induit par la résonance de la colonne, il a également été proposé d'introduire un clapet dans le support hydroélastique.

On a également proposé de piloter un support hydroélastique de groupe motopropulseur de manière à le maintenir en phase avec la caisse du véhicule de façon à supprimer les trépidations du moteur engendrées par les roues.

On connaît également une conception de support hydroélastique, ou de cale, dite "synchrone" qui permet de filtrer et d'annihiler les vibrations induites par le groupe motopropulseur en introduisant dans le support des impulsions synchrones avec les harmoniques des vibrations du groupe motopropulseur, et notamment avec les harmoniques d'ordre 2.

Selon que l'on désire privilégier l'amortissement des vibrations provenant du roulement du véhicule ou des vibrations provenant du groupe motopropulseur, on privilégie l'utilisation de l'un ou l'autre type de support hydroélastique.

JP-A-62 035 129 décrit un support hydroélastique destiné à être interposé entre un groupe motopropulseur de véhicule automobile et la structure de la caisse du véhicule, du type comportant deux armatures qui sont reliées respectivement au groupe motopropulseur et à la structure de la caisse et qui sont réunies par une masse en matériau élastomère, ce support comportant à sa partie supérieure une première chambre de travail, remplie au moins partiellement de liquide et délimitée au moins en partie par la masse en matériau élastomère et par une cloison mobile en matériau élastique, ce support comportant de plus à sa partie inférieure une seconde chambre de travail qui est délimitée au moins en partie par la masse en matériau élastomère et par une membrane élastique.

La présente invention vise à proposer une nouvelle conception d'un support hydroélastique permettant de traiter les vibrations provenant des deux sources précisées plus haut.

A cet effet, l'invention propose un support hydroélastique du type précité, caractérisé en ce que la face extérieure de la cloison mobile comporte un poussoir avec lequel coopère un dispositif d'entraînement de la cloison mobile pour appliquer à cette dernière des déplacements commandés de manière à créer dans la première chambre de travail des forces de pression synchrones avec les harmoniques des vibrations du groupe motopropulseur, et en ce que la membrane élastique comporte des moyens de raccordement à une capacité à volume variable agencée entre la structure de la caisse du véhicule et une partie adjacente d'un amortisseur télescopique appartenant à la suspension du véhicule, la seconde chambre de travail et la capacité étant remplies de liquide.

La partie supérieure, ou étage supérieur, du support selon l'invention comporte ainsi une chambre de travail qui subit des variations de volume en fonction des impulsions produites de façon synchrone, par exemple par une came extérieure additionnelle. Un tel système de production d'impulsions est par exemple décrit et représenté dans la demande de brevet français n° 92 05655. Le domaine d'action de l'étage supérieur du support est associé aux vibrations résultant du cycle thermodynamique de fonctionnement du moteur et aux inerties des masses en mouvement alternatif, à une fréquence comprise entre 30 et 200 Hz et selon une amplitude de quelques centièmes à quelques dixièmes de millimètres. L'étage supérieur traite donc les vibrations qui sont principalement à l'origine des bruits de bourdonnement dans l'habitacle du véhicule.

La partie inférieure, ou étage inférieur, du support fait appel à la conception d'un dispositif de suspension du type de celui décrit et représenté dans le document FR-A-2.272.857. Toute variation de volume du fluide dans la capacité reliée à la tige d'amortisseur est transmise à la seconde chambre de travail et provoque un déplacement du groupe motopropulseur en phase par rapport à la caisse du véhicule.

L'étage inférieur traite ainsi des vibrations dont la fréquence est comprise entre 8 et 15 Hz et dont l'amplitude est comprise entre quelques dixièmes et quelques millimètres.

Selon d'autres caractéristiques de l'invention :
- la masse en matériau élastomère présente une symétrie de révolution autour d'un axe correspondant sensiblement à la direction générale de sollicitation du support ;
- le support comporte, agencées successivement selon la direction générale de sollicitation du support, une armature supérieure reliée à l'extrémité supérieure de la masse en matériau élastomère, la masse en matériau élastomère, et une armature inférieure reliée à l'extrémité inférieure de la masse en matériau élastomère
- l'armature supérieure présente une symétrie de révolution autour de l'axe de la masse en matériau élastomère et est fermée à sa partie supérieure par la cloison mobile ;
- l'armature inférieure présente une symétrie de révolution autour de l'axe de la masse en matériau élastomère et est fermée à sa partie inférieure par la membrane élastique ;
- la masse en matériau élastomère est constituée par un élément en forme générale de bobine biconique ;
- la paroi interne de la membrane élastique comporte une protubérance de butée dont le profil est sensiblement complémentaire du profil de la surface interne du cône inférieur de la masse en matériau élastomère ;
- l'armature supérieure comporte une bride pour sa fixation au groupe motopropulseur du véhicule ;
- la bride est constituée par un disque agencé à l'intérieur de l'armature supérieure et qui est percé en son centre pour recevoir la cloison mobile.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe axiale d'un exemple de réalisation d'un support hydroélastique conforme aux enseignements de l'invention ; et
- la figure 2 est une représentation schématique illustrant l'agencement d'un support, conforme aux enseignements de l'invention, dans un véhicule automobile dans lequel il est interposé entre le groupe motopropulseur et la structure de la caisse.

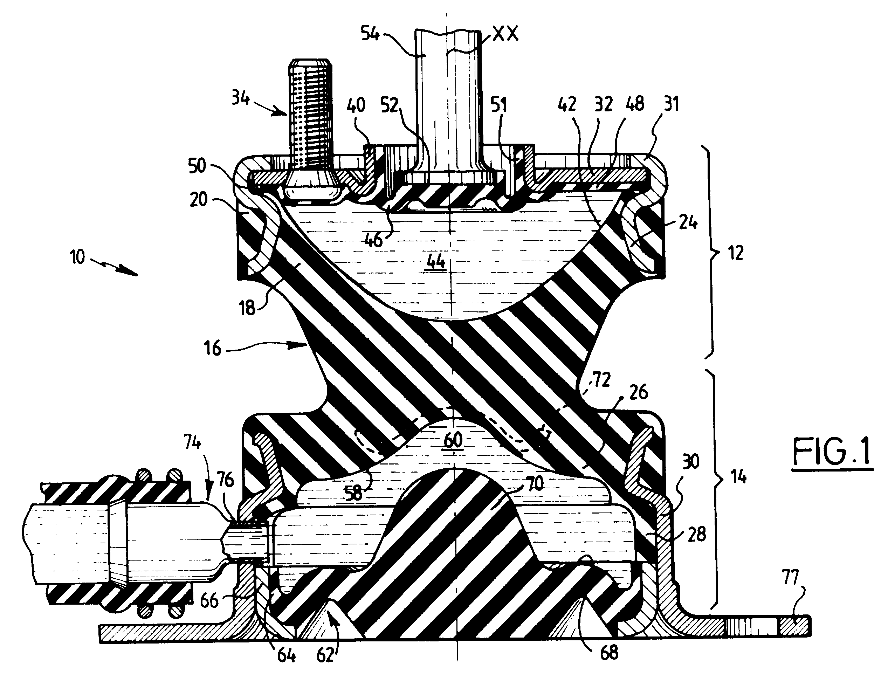

Le support hydroélastique 10 illustré sur la figure 1 présente une symétrie générale de conception autour d'un axe X-X.

Le support 10 comporte une partie, ou étage, supérieur 12 et une partie, ou étage, inférieur 14.

Le support hydroélastique 10 comporte une masse en matériau élastomère 16 réalisée sous la forme d'un élément unique qui assure, outre des fonctions d'amortissement qui seront décrites par la suite, la liaison entre les parties supérieure 12 et inférieure 14 du support.

A cet effet, le bloc en matériau élastomère 16 présente une forme générale de bobine biconique.

La partie conique supérieure 18 a son extrémité supérieure 20 fixée par adhérisation sur une armature supérieure 24 du support qui présente une forme générale cylindrique centrée sur l'axe X-X.

La partie conique inférieure 26 du bloc en matériau élastomère 16 a son extrémité inférieure 28 fixée par adhérisation sur une armature inférieure 30 du support de forme générale cylindrique centrée sur l'axe X-X.

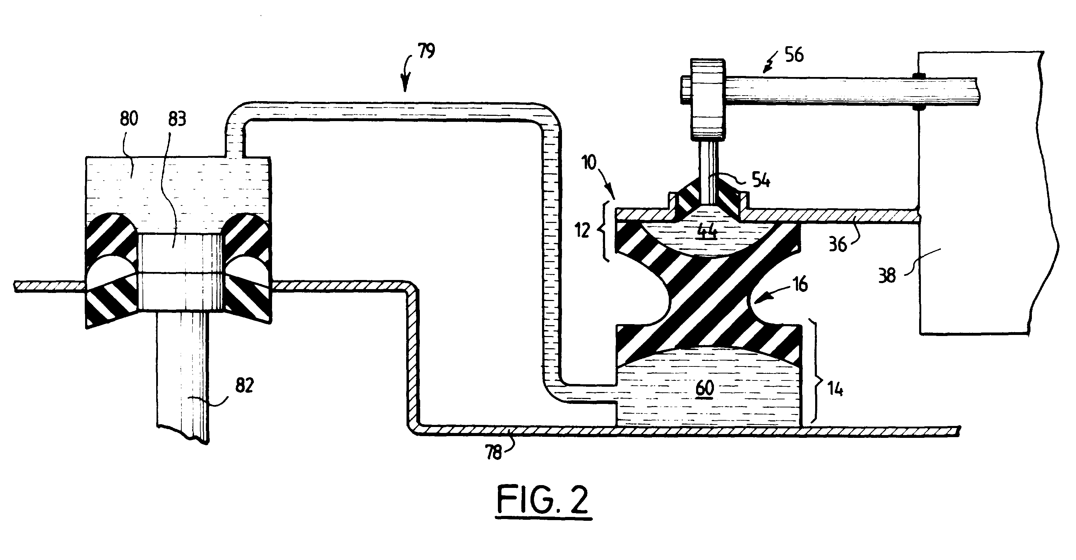

Le bord supérieur 31 de l'armature supérieure 24 est rabattu pour fixer par pincement un disque d'armature 32 qui comporte des vis de fixation 34 pour assurer la fixation du support 10 sur un élément de structure 36 du groupe motopropulseur 38 (voir figure 2).

Le disque d'armature 32 est percé en son centre par un trou délimité par une virole 40.

La surface concave interne 42 de la partie supérieure 18 du bloc 16 délimite une première chambre de travail 44, également appelée "chambre anti-bourdonnement" qui est fermée à sa partie supérieure par une cloison mobile 46 réalisée en matériau élastomère.

La cloison 46 est réalisée venue de matière avec une membrane d'étanchéité 48 qui recouvre la face inférieure du disque d'armature 32 et dont le bord périphérique 50 est pincé de manière étanche par le bord rabattu 31.

La cloison mobile 46 se prolonge également par une virole d'étanchéité 51 qui est adhérisée sur la surface cylindrique interne de la virole 40 du disque d'armature 32.

La face supérieure 52 de la cloison mobile 46 comporte un poussoir d'actionnement 54 qui permet d'appliquer à la cloison mobile 46 des efforts selon la direction X-X.

Comme cela est schématisé sur la figure 2, ces efforts sont par exemple appliqués directement, ou indirectement, par une came tournante 56 du groupe motopropulseur selon une technique qui est par exemple décrite et représentée dans les documents FR-A-2.364.373 et FR-A-2.507.976.

La surface concave interne 58 de la partie conique inférieure 26 du support 16 délimite une seconde chambre de travail 60, également appelée "chambre anti-hachis", qui est fermée à sa partie inférieure par une membrane élastique 62 formant bouchon.

La membrane élastique 62 est réalisée en matériau élastomère et son bord périphérique 64 est fixé par adhérisation sur une virole métallique de renfort 66 qui est emmanchée à force dans la partie inférieure de la jupe cylindrique principale de l'armature inférieure 30.

La face interne 68 de la membrane de fermeture 62 comporte une protubérance en forme de bossage convexe 70 qui est une butée prévue pour coopérer le cas échéant avec la portion en vis-à-vis de la surface interne 58 de la chambre 60.

A cet effet, le bloc en matériau élastomère 58 peut comporter un élément de renfort 72 qui épouse sensiblement la forme de la surface interne 58.

La seconde chambre de travail 60 est reliée à l'extérieur par un raccord 74 dont l'extrémité 76 traverse de manière étanche la jupe cylindrique de l'armature inférieure 30 et débouche dans la chambre 60.

Enfin, l'armature inférieure 30 comporte une bride inférieure 77 prévue pour permettre la fixation du support sur la structure 78 de la caisse du véhicule (voir figure 2).

Comme on peut le voir sur la figure 2, la seconde chambre de travail 60 est prévue pour être reliée par une conduite 79 à une cavité 80 dont le volume varie en fonction des déplacements d'un organe 83 constitué par une tête de la tige 82 d'un amortisseur télescopique (non représenté) appartenant à une suspension de roue du véhicule.

L'étage inférieur 14 du support 10 associé au circuit (79, 80, 82) reconstitue ici un dispositif de suspension du type de celui décrit et représenté dans les documents FR-A-2.272.857 et FR-A-2.607.757 au contenu desquels on pourra se reporter pour en connaître des exemples de réalisation et le mode de fonctionnement.

Dans le mode de réalisation du support hydroélastique 10 qui vient d'être décrit, il n'est pas prévu de chambre d'expansion associée à la première chambre de travail 44 de l'étage supérieur 12 dans la mesure où la fonction (anti-hachis) est normalement assurée par la partie inférieure 14 du support. Il est toutefois possible, sans sortir du cadre de la présente invention, de prévoir une telle chambre d'expansion intégrée à l'étage supérieur 12 du support 10 si l'on souhaite assurer une fonction complémentaire de suppression du phénomène de hachis et notamment lorsque la seconde chambre de travail 60 ne remplit pas son rôle, par exemple en cas de blocage de la tige 82.

L'étage supérieur assure ainsi une fonction anti-bourdonnement, et notamment dans le cas de la suspension d'un groupe motopropulseur à quatre cylindres de type pendulaire dont les supports sont implantés à la verticale de l'axe naturel de roulis du groupe motopropulseur et excitent le bourdonnement à amplitude constante.

L'étage inférieur 14 du support 10 utilise l'effort d'amortissement des amortisseurs téléscopiques avant du véhicule qui est transmis au support 10, en phase et avec un coefficient d'amplitude prédéterminé. On obtient ainsi une suppression des mouvements relatifs entre le groupe motopropulseur et la structure de la caisse du véhicule, et les efforts dynamiques que créent les déplacements sont annihilés, c'est-à-dire que la force d'amortissement de la suspension est partagée proportionnellement aux masses respectives du groupe motopropulseur et de la caisse par le plan vertical contenant le centre de gravité du groupe motopropulseur et dans une bande de fréquence suffisamment large autour de la fréquence du mode de vibration de hachis.

## Revendications

1. Support hydroélastique (10) destiné à être interposé entre un groupe motopropulseur (38) de véhicule automobile et la structure (78) de la caisse du véhicule, du type comportant deux armatures (24,30) qui sont reliées respectivement au groupe motopropulseur (38) et à la structure de la caisse (78) et qui sont réunies par une masse en matériau élastomère (16), ce support comportant à sa partie supérieure une première chambre de travail (44), remplie au moins partiellement de liquide et délimitée au moins en partie par la masse en matériau élastomère (16,18,42) et par une cloison mobile (46) en matériau élastique, ce support (10) comportant de plus à sa partie inférieure (26) une seconde chambre de travail (60) qui est délimitée au moins en partie par la masse en matériau élastomère (16,26,58) et par une membrane élastique (62), caractérisé en ce que la face extérieure (52) de la cloison mobile comporte un poussoir (54) avec lequel coopère un dispositif d'entraînement de la cloison mobile pour appliquer à cette dernière des déplacements commandés de manière à créer dans la première chambre de travail (44) des forces de pression synchrones avec les harmoniques des vibrations du groupe motopropulseur, et en ce que la membrane élastique comporte des moyens de raccordement à une capacité (80) à volume variable agencée entre la structure de la caisse du véhicule (78) et une partie adjacente (83) d'un amortisseur télescopique appartenant à la suspension du véhicule, la seconde chambre de travail (60) et la capacité (80) étant remplies de liquide.

2. Support hydroélastique selon la revendication 1, caractérisé en ce que la masse en matériau élastomère (16) présente une symétrie de révolution autour d'un axe (X-X) correspondant sensiblement à la direction générale de sollicitation du support (10).

3. Support hydroélastique selon la revendication 2, caractérisé en ce qu'il comporte, agencées successivement selon la direction générale de sollicitation du support, une armature supérieure (24) reliée à l'extrémité supérieure (20) de la masse en matériau élastomère (16), la masse en matériau élastomère (16), et une armature inférieure (30) reliée à l'extrémité inférieure (28) de la masse en matériau élastomère (16).

4. Support hydroélastique selon la revendication 3, caractérisé en ce que l'armature supérieure (24) présente une symétrie de révolution autour de l'axe (X-X) de la masse en matériau élastomère (16) et est fermé à sa partie supérieure par la cloison mobile (46).

5. Support hydroélastique selon l'une des revendications 3 ou 4, caractérisé en ce que l'armature inférieure (30) présente une symétrie de révolution autour de l'axe (X-X) de la masse en matériau élastomère (16) et est fermée à sa partie inférieure par la membrane élastique (62).

6. Support hydroélastique selon l'une quelconque des revendications 3 à 5, caractérisé en ce que la masse en matériau élastomère (16) est constituée par un élément en forme générale de bobine biconique.

7. Support hydroélastique selon la revendication 6, caractérisé en ce que la paroi interne (68) de la membrane élastique (62) comporte une protubérance de butée (70) dont le profil est sensiblement complémentaire du profil de la surface interne (58) du cône inférieur (26) de la masse en matériau élastomère (16).

8. Support hydroélastique selon l'une quelconque des revendications 3 à 7, caractérisé en ce que l'armature supérieure (24) comporte une bride (32) pour sa fixation au groupe motopropulseur (38) du véhicule.

9. Support hydroélastique selon la revendication 8 prise en combinaison avec la revendication 4, caractérisé en ce que la bride est constituée par un disque (32) agencé à l'intérieur de l'armature supérieure (24) et qui est percé en son centre (40) pour recevoir la cloison mobile.

10. Dispositif de suspension de la caisse et du groupe motopropulseur (38) dans un véhicule automobile, du type dans lequel une roue est associée à un amortisseur télescopique (82, 83) relié d'une part à la structure de la caisse (78) par une fixation élastique et d'autre part à la roue par un mécanisme de suspension, le groupe motopropulseur (38) étant lui-même supporté élastiquement par la structure de la caisse (78) et du type dans lequel une première capacité (80) de volume variable est disposée entre la caisse et la partie adjacente de l'amortisseur (82, 83), le groupe motopropulseur (38) reposant sur la structure de la caisse par l'intermédiaire d'au moins une deuxième capacité (60) à volume variable reliée à la première par un conduit de liaison (79), ces deux capacités (60, 80) et le conduit (79) de liaison étant remplis d'un fluide incompressible, caractérisé en ce que ladite deuxième capacité à volume variable est constituée par la seconde chambre de travail d'un support hydroélastique (10), réalisé conformément à l'une quelconque des revendications précédentes, qui est interposé entre le groupe motopropulseur et la structure de la caisse du véhicule.

## Patentansprüche

1. Hydroelastischer Träger (10), der dazu vorgesehen ist, zwischen die Antriebsbaugruppe eines Kraftfahrzeugs (38) und die Karosseriestruktur (78) des Fahrzeugs eingesetzt zu werden, des Typs mit zwei Bewehrungen (24, 30), die mit der Antriebsbaugruppe (38) bzw. mit der Karosseriestruktur (78) verbunden sind und über eine Masse aus elastomerem Material (16) vereinigt sind, wobei dieser Träger in seinem oberen Teil eine erste Arbeitskammer (44) aufweist, die wenigstens teilweise mit Flüssigkeit gefüllt ist und wenigstens teilweise durch die Masse aus elastomerem Material (16, 18, 42) und durch eine bewegliche Trennwand (46) aus elastischem Material begrenzt ist, wobei dieser Träger (10) außerdem in seinem unteren Teil (26) eine zweite Arbeitskammer (60) aufweist, die wenigstens teilweise durch die Masse aus elastomerem Material (16, 26, 58) und durch eine elastische Membran (62) begrenzt ist, dadurch gekennzeichnet, daß die äußere Fläche (52) der beweglichen Trennwand eine Schubstange (54) aufweist, mit der eine Mitnahmevorrichtung der beweglichen Trennwand zusammenwirkt, um an dieser letzteren Verschiebungen vorzunehmen, die in der Weise gesteuert werden, daß in der ersten Arbeitskammer (44) Druckkräfte erzeugt werden, die mit den Harmonischen der Schwingungen der Antriebsbaugruppe synchron sind, und daß die elastische Membran Mittel für die Verbindung mit einem Behälter (80) mit variablem Volumen enthält, der zwischen der Karosseriestruktur (78) des Fahrzeugs und einem Teil (83) angeordnet ist, der zu einem zur Aufhängung des Fahrzeugs gehörenden Teleskopdämpfer benachbart ist, wobei die zweite Arbeitskammer (60) und der Behälter (80) mit Flüssigkeit gefüllt sind.

2. Hydroelastischer Träger nach Anspruch 1, dadurch gekennzeichnet, daß die Masse aus elastomerem Material (16) eine Rotationssymmetrie um eine Achse (X-X) aufweist, die im wesentlichen der allgemeinen Richtung der Beanspruchung des Trägers (10) entspricht.

3. Hydroelastischer Träger nach Anspruch 2, dadurch gekennzeichnet, daß er in einer Anordnungsfolge in der allgemeinen Richtung der Beanspruchung des Trägers eine obere Bewehrung (24), die mit dem oberen Ende (20) der Masse aus elastomerem Material (16) verbunden ist, die Masse aus elastomerem Material (16) und eine untere Bewehrung (30) enthält, die mit dem unteren Ende (28) der Masse aus elastomerem Material (16) verbunden ist.

4. Hydroelastischer Träger nach Anspruch 3, dadurch gekennzeichnet, daß die obere Bewehrung (24) eine Rotationssymmetrie um die Achse (X-X) der Masse aus elastomerem Material (16) aufweist und in ihrem oberen Teil durch die bewegliche Trennwand (46) verschlossen ist.

5. Hydroelastischer Träger nach einem der Ansprüche 3 oder 4, dadurch gekennzeichnet, daß die untere Bewehrung (30) eine Rotationssymmetrie um die Achse (X-X) der Masse aus elastomerem Material (16) aufweist und in ihrem unteren Teil durch die elastische Membran (62) verschlossen ist.

6. Hydroelastischer Träger nach irgendeinem der Ansprüche 3 bis 5, dadurch gekennzeichnet, daß die Masse aus elastomerem Material (16) durch ein Element mit der allgemeinen Form einer doppelkonischen Spule gebildet ist.

7. Hydroelastischer Träger nach Anspruch 6, dadurch gekennzeichnet, daß die Innenwand (68) der elastischen Membran (62) einen Anschlagvorsprung (70) enthält, dessen Profil zum Profil der inneren Oberfläche (58) des unteren Kegels (26) der Masse aus elastomerem Material (16) im wesentlichen komplementär ist.

8. Hydroelastischer Träger nach irgendeinem der Ansprüche 3 bis 7, dadurch gekennzeichnet, daß die obere Bewehrung (24) einen Flansch (32) für ihre Befestigung an der Antriebsbaugruppe (38) des Fahrzeugs enthält.

9. Hydroelastischer Träger nach Anspruch 8 in Kombination mit Anspruch 4, dadurch gekennzeichnet, daß der Flansch durch eine Scheibe (32) gebildet ist, die innerhalb der oberen Bewehrung (24) angeordnet ist und in der Mitte (40) ein Loch aufweist, um die bewegliche Trennwand aufzunehmen.

10. Aufhängungsvorrichtung für die Karosserie und die Antriebsbaugruppe (38) eines Kraftfahrzeugs, des Typs, bei dem einem Rad ein Teleskopdämpfer (82, 83) zugeordnet ist, der einerseits mit der Karosseriestruktur (78) durch eine elastische Befestigung und andererseits mit dem Rad durch einen Aufhängungsmechanismus verbunden ist, wobei die Antriebsbaugruppe (38) ihrerseits elastisch durch die Karosseriestruktur (78) getragen wird und vom Typ ist, in dem ein erster Behälter (80) mit variablem Volumen zwischen der Karosserie und dem Teil angeordnet ist, der zu dem Dämpfer (82, 83) benachbart ist, wobei die Motorbaugruppe (38) auf der Karosseriestruktur über wenigstens einen zweiten Behälter (60) mit variablem Volumen aufruht, der mit dem ersten über eine Verbindungsleitung (79) verbunden ist, wobei diese zwei Behälter (60, 80) und die Verbindungsleitung (79) mit einem nicht komprimierbaren Fluid gefüllt sind, dadurch gekennzeichnet, daß der zweite Behälter mit variablem Volumen durch die zweite Arbeitskammer eines hydroelastischen Trägers (10) gebildet ist, der gemäß irgendeinem der vorangehenden Ansprüche verwirklicht ist und zwischen die Antriebsbaugruppe und die Karosseriestruktur des Fahrzeugs eingesetzt ist.

## Claims

1. Hydroelastic support (10) intended to be interposed between an engine unit (38) of an automobile and the structure (78) of the body of the vehicle, of the type having two bracing frames (24, 30) which are connected respectively to the engine unit (38) and to the structure of the body (78) and which are joined by a mass of elastomeric material (16), this support having in its upper part a first working chamber (44), filled at least partially with liquid and delimited at least in part by the mass of elastomeric material (16, 18, 42) and by a movable partition (46) made from elastic material. this support (10) also having in its lower part (26) a second working chamber (60) which is delimited at least in part by the mass of elastomeric material (16, 26, 58) and by an elastic membrane (62), characterised in that the external face (52) of the movable partition includes a push rod (54) with which a device for driving the movable partition co-operates in order to apply to this latter displacements which are controlled in such a way as to create pressure forces in the first working chamber (44) which are synchronous with the harmonics of the vibrations of the engine unit, and that the elastic membrane has means for connection to a space (80) of variable volume provided between the structure of the body of the vehicle (78) and an adjacent part (83) of a telescopic shock absorber belonging to the suspension of the vehicle, the second working chamber (60) and the space (80) being filled with liquid.

2. Hydroelastic support as claimed in Claim 1, characterised in that the mass of elastomeric material (16) is rotationally symmetrical about an axis (X-X) corresponding substantially to the general direction of stressing of the support (10).

3. Hydroelastic support as claimed in Claim 2, characterised in that it includes, provided in succession in the general direction of stressing of the support, an upper bracing frame (24) connected to the upper end (20) of the mass of elastomeric material (16), the mass of elastomeric material (16), and a lower bracing frame (30) connected to the lower end (28) of the mass of elastomeric material (16).

4. Hydroelastic support as claimed in Claim 3, characterised in that the upper bracing frame (24) is rotationally symmetrical about the axis (X-X) of the mass of elestomeric material (16) and is closed on its upper part by the movable partition (46).

5. Hydroelastic support as claimed in one of Claims 3 or 4, characterised in that the lower bracing frame (30) is rotationally symmetrical about the axis (X-X) of the mass of elastomeric material (16) and is closed on its lower part by the elastic membrane (62).

6. Hydroelastic support as claimed in any one of Claims 3 to 5, characterised in that the mass of elastomeric material (16) is constituted by an element having the general shape of a biconical bobbin.

7. Hydroelastic support as claimed in Claim 6, characterised in that the internal partition (68) of the elastic membrane (62) has an abutment protrusion (70) the profile of which is substantially complementary to the profile of the internal surface (58) of the lower cone (26) of the mass of elastomeric materiel (16).

8. Hydroelastic support as claimed in any one of Claims 3 to 7, characterised in that the upper bracing frame (24) has a flange (32) for fixing it to the engine unit (38) of the vehicle.

9. Hydroelastic support as claimed in Claim 8 taken in combination with Claim 4, characterised in that the flange is constituted by a disc (32) which is provided in the interior of the upper bracing frame (24) and is pierced in its centre (40) in order to receive the movable partition.

10. Device for suspension of the body and of the engine unit (38) in an automobile, of the type in which a wheel is associated with a telescopic shock absorber (82, 83) connected on the one hand to the structure of the body (78) by an elastic fixing and on the other hand to the wheel by a suspension mechanism, the engine unit (38) itself being supported elastically by the structure of the body (78) and of the type in which a first space (80) of variable volume is disposed between the body and the adjacent part of the shock absorber (82, 83), the engine unit (38) resting on the structure of the body through the intermediary of at least a second space (60) of variable volume connected to the first by a connecting conduit (79), these two spaces (60, 80) and the connecting conduit (79) being filled with an incompressible fluid, characterised in that the said second space of variable volume is formed by the second working chamber of a hydroelastic support (10) constructed in accordance with any of the preceding claims which is interposed between the engine unit and the structure of the body of the vehicle.
